Europäisches Patentamt

European Patent Office

Office européen des brevets

(11) Veröffentlichungsnummer: **0 492 104 A2**

# EUROPÄISCHE PATENTANMELDUNG

(21) Anmeldenummer: **91119147.6**

(22) Anmeldetag: **11.11.91**

(51) Int. Cl.5: **H02G 11/00**, D06F 81/00

(30) Priorität: **22.12.90 DE 4041585**

(43) Veröffentlichungstag der Anmeldung:
**01.07.92 Patentblatt 92/27**

(84) Benannte Vertragsstaaten:
**AT BE CH ES FR IT LI NL**

(71) Anmelder: **Hailo-Werk Rudolf Loh GmbH & Co. KG**
**Industriestrasse**
**W-6342 Haiger(DE)**

(72) Erfinder: **Klaas, Manfred**
**Läbachstrasse 7**
**W-6342 Haiger 3 - Langenaubach(DE)**

(74) Vertreter: **Vogel, Georg Pat.-Ing.**
**Hermann-Essig-Str. 35**
**W-7141 Schwieberdingen(DE)**

(54) **Kabelklemme.**

(57) Die Erfindung betrifft eine Kabelklemme, insbesondere für Kabel von Haushaltsgeräten. Sie weist zwei gegeneinander verschwenkbare Arme mit nach außen hin offenen Kabelabschnittaufnahmen auf, die in einer Relativlage der Arme zueinander fluchten, während sie in Ruhelage der Arme gegeneinander versetzt sind.

EP 0 492 104 A2

Die Erfindung betrifft eine Kabelklemme insbesondere für Kabel von Haushaltsgeräten.

Bei herkömmlichen Kabelklemmen der eingangs genannten Art, wie sie z.B. in der EP 0 278 097 A1 beschrieben sind, wird das Kabel in das Haltemaul, das durch zwei Schenkel definiert ist, gesteckt. Ist der Durchmesser des Kabels kleiner als der Abstand der das Haltemaul definierenden Schenkel, dann ist eine ordnungsgemäße Aufnahme eines Kabelabschnittes im Maul nicht ohne weiteres möglich.

Ausgehend von dem obigen Stand der Technik liegt der Erfindung die Aufgabe zugrunde, hier Abhilfe zu schaffen und eine Kabelklemme vorzuschlagen, durch die auch ein Kabel ordnungsgemäß festgehalten werden kann, dessen Durchmesser kleiner ist als die Öffnung des Maules.

Die gestellte Aufgabe wird erfindungsgemäß durch zwei gegeneinander verschwenkbare Arme mit nach außen hin offenen Kabelabschnittaufnahmen gelöst, die in einer Relativlage der Arme zueinander fluchten, während sie in Ruhelage der Arme gegeneinander versetzt sind.

Man erkennt, daß die Erfindung jedenfalls dann verwirklicht ist, wenn die Kabelabschnittaufnahmen aufweisenden Arme zueinander so angeordnet sind, daß sie nach Aufnahme des Kabelabschnittes denselben biegen oder auf ihn Kräfte ausüben, die es verhindern, daß der Kabelabschnitt die Kabelabschnittaufnahme verläßt.

Weitere zweckmäßige und vorteilhafte Ausgestaltungen der Erfindung gehen aus den Unteransprüchen hervor.

Eine besonders zweckmäßige Ausgestaltung sieht vor, daß die Arme etwa parallel zueinander verlaufen und in ihrem von den Kabelabschnittaufnahmen abgewandten Enden miteinander lösbar verbindbar sind. Bei den Armen handelt es sich um aus Kunststoff hergestellte Teile, die miteinander lösbar verbindbar sind, wobei sie im Betriebszustand der Kabelklemme fest verbunden sind.

Eine weitere zweckmäßige Ausgestaltung sieht vor, daß der Innenumriß der Kabelabschnittaufnahme etwa U-förmig ist. Hierbei ist es zweckmäßig, wenn die die Kabelabschnittaufnahmen definierenden Schenkel der Arme elastisch verformbar sind.

Eine ordnungsgemäße Verbindung des Kabels mit der Kabelklemme ist jedenfalls dann erreichbar, wenn die Kabelabschnittaufnahme auf den Durchmesser des aufgenommenen Kabelabschnittes abgestimmt ist. Die Öffnung der Kabelabschnittaufnahme kann jedoch auch größer sein, wobei zu beachten ist, daß die Arme auf den Kabelabschnitt so hohe Kräfte auszuüben haben, daß es zu keiner Lösung des Kabels von der Kabelklemme kommen kann.

Eine weitere zweckmäßige Ausgestaltung sieht vor, daß der eine Arm zwei mit Abstand zueinander angeordnete und etwa parallel verlaufende Kabelabschnittaufnahme besitzt, zwischen denen die Kabelabschnittaufnahme des anderen Armes angeordnet ist. Auf diese Weise werden auf den aufgenommenen Kabelabschnitt Scherkräfte ausgeübt, die quer zur Entnahmerichtung des Kabelabschnittes verlaufen.

Wird die Kabelklemme bei Bügelbrettern benutzt, dann ist es zweckmäßig, wenn im Verbindungsbereich der Arme eine Steckaufnahme für einen Träger der Kabelklemme ausgebildet ist. Das obere Ende des Trägers ist mit der Kabelklemme verbunden, während sein unteres Ende am Bügelbrett festschraubbar ist.

Ein Ausführungsbeispiel der Erfindung ist in der Zeichnung schematisch dargestellt und wird im folgenden näher erläutert. Es zeigen

Fig. 1   eine Kabelklemme in perspektivischer Seitenansicht,

Fig. 2   die in Fig. 1 dargestellte Kabelklemme in Seitenansicht,

Fig. 3   eine Draufsicht der Kabelklemme nach Fig. 2 in Richtung des Pfeiles III,

Fig. 4   einen Schnitt entlang der Linie IV-IV nach Fig. 3 und

Fig. 5   einen Schnitt entlang der Linie V-V nach Fig. 4.

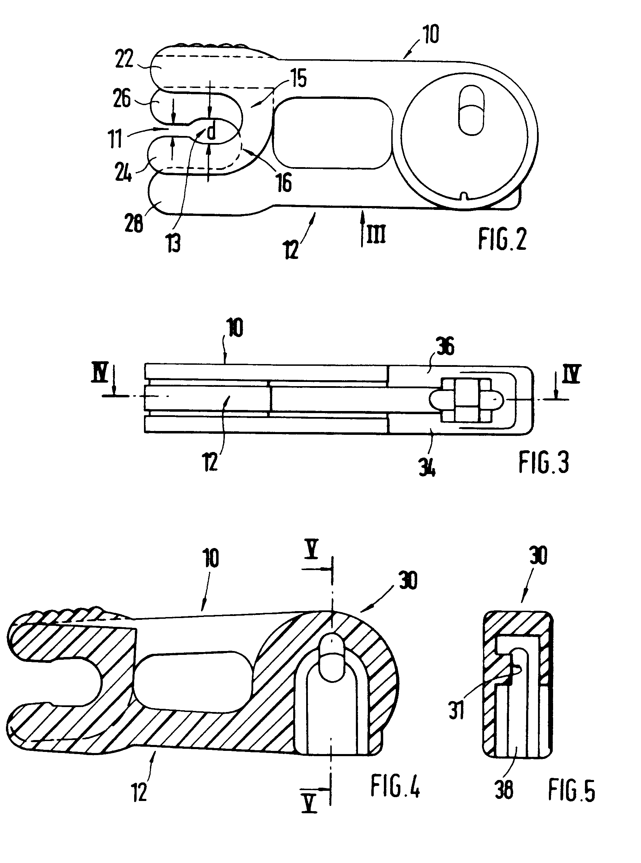

In den Figuren ist eine Kabelklemme für Kabel von Haushaltsgeräten dargestellt. Sie besitzt zwei gegeneinander verschwenkbare Arme 10 und 12 mit nach außen hin offenen Kabelabschnittaufnahmen 14,15 und 16, die in einer Relativlage der Arme 10 und 12 (vgl. Fig. 4) zueinander annähernd fluchten, während sie in Ruhelage (vgl. Fig. 2) der Arme 10 und 12 gegeneinander versetzt sind. Die Arme 10 und 12 verlaufen etwa parallel zueinander und sind in ihren von den Kabelabschnittaufnahmen 14,15 und 16 abgewandten Enden miteinander lösbar verbindbar. Der Innenumriß der Kabelabschnittaufnahme 14,15 und 16 ist etwa U-förmig und von Schenkeln 18,20;22,24 und 26,28 der Arme 10 und 12 definiert. Diese Schenkel sind elastisch verformbar und auf den Durchmesser des aufgenommenen Kabelabschnittes anpaßbar. Der Abstand der Schenkel 18 und 20 der jeweiligen Kabelabschnittaufnahme 14 voneinander ist größer als der Durchmesser des aufgenommenen Kabels. Die Höhe d des Aufnahmeraumes 13 (vgl. Fig. 2) ist allenfalls so groß, wie der Durchmesser des aufgenommenen Kabels. Da die Arme 10 und 12 aus relativ hartem Kunststoff bestehen und elastisch verformbar sind, wird auf den aufgenommenen Kabelabschnitt Kraft ausgeübt, so daß sich die Schenkel 24 und 26 zumindest teilweise in den Kabelabschnitt eindrücken, wodurch eine unverrutschbare Verbindung zwischen dem Kabelabschnitt und der Kabelklemme hergestellt ist. Die Höhe des Aufnahmeabschnittes ist geringer als die Höhe d, so daß es zu einem ungewollten Lösen des Kabelabschnittes aus der Kabelklemme nicht kommen kann.

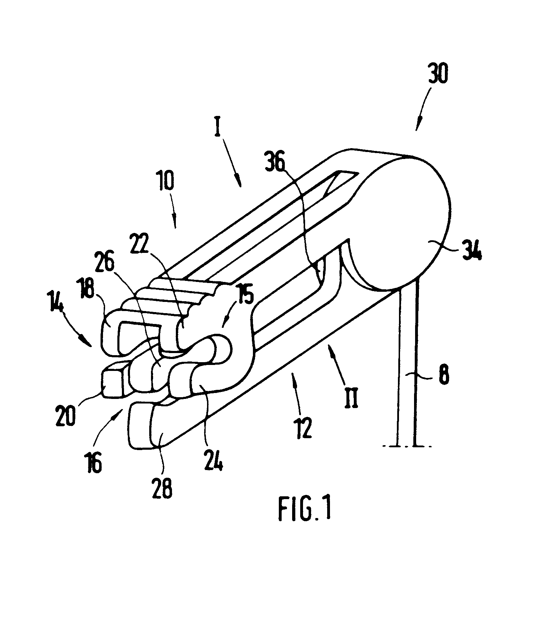

In Fig. 1 ist die Kabelklemme im entspannten Zustand dargestellt. Werden nun die beiden Arme 10 und 12 gegeneinander und in Richtung der Pfeile I und II gedrückt, dann nimmt die mittlere Kabelabschnittaufnahme 16 die in Fig. 4 dargestellte Position ein. Hier weist die Einlaßöffnung 11 ihre maximale Breite auf, so daß der Kabelabschnitt problemlos in die Kabelabschnittaufnahmen eingeführt werden kann. Werden die Arme 10 und 12 nicht mehr betätigt, dann versuchen sie ihre in Fig. 1 dargestellte Position einzunehmen, wodurch es zum Versetzen der Kabelabschnittaufnahme 16 mit Bezug auf die Kabelabschnittaufnahme 14 und 15 kommt. Auf den aufgenommenen Kabelabschnitt wird Kraft ausgeübt, die verhindert, daß das Kabel von der Kabelklemme gelöst werden kann. Im Verbindungsbereich 30 weist der äußere Arm 10 eine Aufnahme mit einem Rastbolzen 31 auf, der mit einer Rastaufnahme des inneren Armes 12 lösbar verbindbar ist. Der innere Arm 12 hat ein scheibenförmiges Endstück, das zwischen die scheibenförmigen Schenkel 34 und 36 des oberen Armes 10 einsteckbar ist. Ferner ist im Verbindungsbereich 30 eine Aufnahme 38 für den Träger 8 hervorgesehen.

Es wäre selbstverständlich auch möglich, die Kabelklemme einstückig als Spritzgußteil auszubilden.

**Patentansprüche**

1. Kabelklemme, insbesondere für Kabel von Haushaltsgeräten,
gekennzeichnet durch
zwei gegeneinander verschwenkbare Arme (10,12) mit nach außen hin offenen Kabelabschnittaufnahmen (14,15,16), die in einer Relativlage der Arme (10,12) zueinander fluchten, während sie in Ruhelage der Arme gegeneinander versetzt sind.

2. Kabelklemme nach Anspruch 1,
dadurch gekennzeichnet,
daß die Arme (10,12) etwa parallel zueinander verlaufen und in ihren von den Kabelabschnittaufnahmen (14,15,16) abgewandten Enden miteinander lösbar verbindbar sind.

3. Kabelklemme nach Anspruch 1 oder 2,
dadurch gekennzeichnet,
daß der Innenumriß der Kabelabschnittaufnahme (14,15,16) etwa U-förmig ist.

4. Kabelklemme nach einem der Ansprüche 1 bis 3,
dadurch gekennzeichnet,
daß die die Kabelabschnittaufnahmen (14,15,16) definierenden Schenkel (18,20;22,24;26,28) der Arme (10,12) elastisch verformbar sind.

5. Kabelklemme nach einem der Ansprüche 1 bis 4,
dadurch gekennzeichnet,
daß der Abstand der Schenkel (18,20) der jeweiligen Kabelabschnittaufnahme (14) voneinander geringer ist als der Durchmesser des aufgenommenen Kabels.

6. Kabelklemme nach einem der Ansprüche 1 bis 5,
dadurch gekennzeichnet,
daß der eine Arm (10) zwei mit Abstand zueinander angeordnete und etwa parallel verlaufende Kabelabschnittaufnahmen (14,15) besitzt, zwischen denen die Kabelabschnittaufnahmen (16) des anderen Armes (12) angeordnet ist.

7. Kabelklemme nach einem der Ansprüche 1 bis 6,
dadurch gekennzeichnet,
daß die Arme durch Rastverbindungen miteinander lösbar verbindbar sind.

8. Kabelklemme nach einem der Ansprüche 1 bis 7,
dadurch gekennzeichnet,
daß im Verbindungsbereich der Arme (10,12) eine Steckaufnahme für einen Träger (8) der Kabelklemme ausgebildet ist.

9. Kabelklemme nach einem der Ansprüche 1 bis 8,
dadurch gekennzeichnet,
daß die Arme (10,12) form- und kraftschlüssig miteinander verbindbar sind.

10. Kabelklemme nach einem der Ansprüche 1 bis 9,
dadurch gekennzeichnet,
daß der eine Arm (10) Rastaufnahmen besitzt, in die Rastvorsprünge des anderen Armes (12) einsteckbar sind.

FIG.1

FIG.2

FIG.3

FIG.4

FIG.5